# FASCICULE DE BREVET EUROPEEN

(11) **EP 3 935 817 B1**
(45) Date de publication et mention de la délivrance du brevet: **23.09.2026**
(21) Numéro de dépôt: 20725810.4
(22) Date de dépôt: 03.03.2020
(51) Int. Cl.: H04L 67/12, H04L 67/56

(54) **MODULE DE COLLECTE DE DONNÉES RELATIVES À UN ÉQUIPEMENT D'UN VÉHICULE DE TRANSPORT DE PASSAGERS**
MODUL ZUM SAMMELN VON DATEN BETREFFEND EINE VORRICHTUNG EINES PERSONENTRANSPORTFAHRZEUGES
MODULE FOR COLLECTING DATA RELATING TO A DEVICE OF A PASSENGER TRANSPORT VEHICLE

(30) Priorité: 04.03.2019 FR 1902194
(43) Date de publication de la demande: 12.01.2022
(73) Titulaire: Faiveley Transport Tours, 37700 Saint Pierre des Corps (FR)
(72) Inventeur: BAYOUDH, Saber, 37200 Tours (FR); LAMIDE, Fabrice, 37270 Montlouis Sur Loire (FR)
(74) Mandataire: Santarelli
(86) Numéro de dépôt international: PCT/FR2020/050419
(87) Numéro de publication internationale: WO 2020/178520

(56) Documents cités:
- CN-A- 103 809 586
- CN-A- 104 458 296
- CN-A- 109 413 614

## Description

La présente invention concerne un module de collecte de données relatives à au moins un équipement d'un véhicule de transport de passagers.

Elle concerne en outre un système et un procédé de traitement de ces données.

L'invention s'applique en particulier aux véhicules de transport ferroviaire comme par exemple les trains, les métros, les tramways, les trolleybus, etc.

Les véhicules de transport de passagers tels que les véhicules de transport ferroviaire comportent de nombreux équipements destinés notamment au fonctionnement du véhicule et au confort des passagers. Par exemple, les équipements peuvent être le système de freinage, l'unité de traitement et de génération d'air, le système de contrôle d'ouverture/fermeture des portes, le système de climatisation etc. Dans ce document, on se réfère par « *équipements* » à un ou plusieurs équipements présents dans le véhicule de transport ferroviaire.

En général, chaque équipement est associé à un contrôleur d'équipement qui est destiné à contrôler son fonctionnement. Parfois, le contrôleur fait partie de l'équipement. Dans certains cas, un seul contrôleur d'équipement peut gérer le fonctionnement de plusieurs équipements.

Dans les véhicules de transport ferroviaire actuels, les divers équipements, en particulier les contrôleurs d'équipement, communiquent avec un ordinateur de bord au moyen d'un réseau. Les équipements actuels sont des équipements électroniques, dit « intelligents », gérés par un ou plusieurs microprocesseurs. L'ordinateur de bord est connu en terminologie anglo-saxonne comme TCMS (pour « *Train Control and Monitoring System* »). L'ordinateur de bord est destiné à communiquer avec les contrôleurs d'équipement dans le véhicule afin de gérer le fonctionnement des équipements à bord du véhicule et de surveiller leur bon fonctionnement.

Les réseaux équipant les véhicules de transport ferroviaire pour la communication des équipements et l'ordinateur de bord, permettent d'échanger des données en quantité différente en fonction de l'époque de construction du train.

Bien que la capacité d'échange de ces réseaux s'améliore avec le temps, dans les trains anciens, l'échange de données entre les équipements et l'ordinateur de bord, et par conséquent les fonctionnalités de l'ordinateur de bord utilisant les données relatives aux équipements, restent assez limitées.

Afin d'augmenter la quantité d'information récoltée dans des véhicules ferroviaires relativement anciens, il est connu d'installer des réseaux filaires de nouvelle génération, tel que des réseaux Ethernet, ayant de meilleures performances que les anciens réseaux.

Néanmoins, cette solution est très intrusive dès lors qu'elle nécessite la dépose de cloisons et habillages nécessaires à la conduite de câbles tout le long du véhicule. En outre, les contrôleurs des équipements ainsi que l'ordinateur de bord deviennent obsolètes et doivent être remplacés afin de pouvoir être utilisés par les réseaux de nouvelle génération. Par conséquent, ce type de solution est très onéreuse. De plus, d'autres éléments intervenant dans la communication entre les équipements, comme par exemple le coupleur qui permet la transmission des signaux filaires entre les voitures, doivent être remplacés, ce qui peut augmenter de manière très significative le coût global.

Une autre solution, moins onéreuse et largement utilisée aujourd'hui, consiste à installer des capteurs, par exemple sans fils, à des points du véhicule qui sont adéquats pour acquérir des informations relatives aux équipements. Ces informations peuvent être par exemple la température dans le compartiment passager ou la position ouverte ou fermée des portes. Néanmoins, une telle solution permet de récolter un nombre d'informations limité et dépendant du nombre de capteurs installé dans le véhicule de transport ferroviaire. En outre, la fiabilité du véhicule de transport ferroviaire se trouve modifiée du fait de l'ajout des capteurs, ces capteurs étant des éléments actifs susceptibles de tomber en panne. Par ailleurs, cette solution ne permet pas de tirer profit des fonctionnalités des contrôleurs des équipements, alors qu'ils ont déjà accès à des informations relatives à l'équipement pour assurer leur propre fonctionnement. Par exemple, le contrôleur de climatisation connaît la température dans le véhicule, le contrôleur de porte connait la position de la porte. Par conséquent, l'ajout de tels capteurs est redondant du point de vue d'obtention de l'information.

Le document CN 109 413 614 A décrit un module de collecte de données relatives à des équipements d'un véhicule de transport de passagers, avec une plate-forme d'analyse intégrée comprenant un sous-système d'acquisition collectant les informations reflétant le fonctionnement d'équipements embarqués. Le document décrit une unité d'interface d'un terminal de maintenance qui collecte des données de surveillance au moyen d'un terminal de maintenance, et une interface véhicule-sol qui collecte les données reflétant le fonctionnement de l'équipement embarqué.

La présente invention a pour but de proposer un module de collecte de données relatives à au moins un équipement d'un véhicule de transport de passagers, permettant d'obtenir à lui tout seul un grand nombre de données, et sans pour autant modifier l'équipement installé dans le véhicule.

A cet effet, la présente invention vise, selon un premier aspect, un module de collecte de données relatives à au moins un équipement d'un véhicule de transport de passagers.

Selon l'invention, le module de collecte de données comporte :
- des moyens de connexion configurés pour être reliés au port de maintenance d'un contrôleur d'équipement gérant le fonctionnement dudit au moins un équipement et pour établir une communication avec le contrôleur d'équipement à travers le port de maintenance ; et
- des moyens de récupération de données configurés pour collecter pendant le fonctionnement dudit au moins un équipement à des instants prédéfinis, des données relatives audit au moins un équipement via la communication établie.

Le module de collecte peut ainsi récupérer à travers le port de maintenance d'un contrôleur d'équipement, des données relatives à l'équipement lui-même sans nécessiter d'installer des éléments additionnels, tels que des capteurs.

La collecte de données est mise en œuvre à des instants prédéfinis permettant de collecter des données au fur et à mesure du fonctionnement dudit au moins un équipement.

Un module de collecte ayant les caractéristiques précisées ci-dessous peut être installé dans un véhicule de transport ferroviaire, par une simple connexion au port de maintenance d'un contrôleur d'équipement et sans avoir à modifier les équipements, contrôleurs d'équipement et réseaux déjà installés dans le véhicule.

L'installation du module de collecte dans le véhicule de transport ferroviaire permet ainsi l'obtention d'une quantité de données élevés sans modifier l'équipement embarqué à bord du véhicule quelle que soit sa génération.

Les moyens de récupération de données sont configurés pour émettre des commandes de lecture de données relatives audit au moins un équipement.

Les commandes de lecture de données sont émises une fois qu'une communication est établie entre le module de collecte de données et le contrôleur d'équipement.

Par exemple, la communication entre le module de collecte de données et le contrôleur d'équipement est une communication de type série.

Le module de collecte de données comporte en outre des moyens de vérification configurés pour vérifier l'authenticité des commandes de lecture.

La présence des moyens de vérification rend sécuritaire la communication entre le module de collecte de données et le contrôleur d'équipement, et l'obtention de données relatives à l'équipement.

Par exemple, une table des commandes autorisées est implantée dans le module de collecte de données lors de la phase de production et permet de vérifier la validité des requêtes envoyées au contrôleur d'équipement. En outre le module de collecte de données contrôle la fréquence d'échanges avec le contrôleur d'équipement et bloque toute requête en incohérence avec cette fréquence.

Selon un mode de réalisation, les moyens de vérification comportent un composant programmable, par exemple de type FPGA.

Selon une caractéristique, le module de collecte de données (et en particulier les moyens de récupération) est configuré pour permettre la communication entre le module de collecte de données et le contrôleur d'équipement, et pour collecter les données relatives à l'équipement. Par exemple, un microprocesseur met en œuvre un logiciel comportant une séquence d'instructions permettant la communication entre le module de collecte de données et l'équipement électrique et la collecte des données relatives à l'équipement.

Ainsi, le module de collecte de données peut être configuré pour s'adapter de manière spécifique à des contrôleurs d'équipement fonctionnant différemment et peut ainsi échanger des données avec le contrôleur d'équipement auquel il est relié. Par conséquent, le module de collecte peut être modifié et adapté en fonction de l'équipement duquel il va collecter des données, ou autrement dit en fonction du contrôleur d'équipement avec lequel il va échanger des informations.

En particulier, les données relatives audit au moins un équipement peuvent comporter des paramètres d'entrée ou de sortie dudit contrôleur d'équipement et/ou des paramètres déterminés par ledit contrôleur d'équipement et/ou des états de défaut déterminés par ledit contrôleur d'équipement.

L'obtention des paramètres d'entrée et de sortie du contrôleur d'équipement permet de connaître en temps réel l'état de l'équipement et les actions du contrôleur d'équipement, c'est-à-dire les commandes adressées aux différents éléments de l'équipement. Ces données permettent de vérifier le bon fonctionnement de l'équipement.

Les paramètres déterminés par le contrôleur d'équipement, qui sont des paramètres fonctionnels de l'équipement ou du véhicule de transport ferroviaire, peuvent également être récupérés. Ces données peuvent être utilisées afin d'analyser en profondeur le comportement de l'équipement et du véhicule de transport ferroviaire en temps réel.

Par ailleurs, le module de collecte de données utilise les capacités d'auto-diagnostique du contrôleur d'équipement puisqu'il collecte également les défauts détectés par le contrôleur d'équipement, ces données permettant de connaître des états de défaut en temps réel lors du fonctionnement de l'équipement.

Par conséquent, les données obtenues par le module de collecte, en plus d'être quantitativement importantes, le sont aussi qualitativement dès lors qu'elles permettent l'obtention des informations très complètes sur le fonctionnement de l'équipement en temps réel. Ces informations pourront être ultérieurement exploitées pour surveiller le fonctionnement des équipements et pour planifier des interventions de maintenance rapidement.

Selon une caractéristique, le module de collecte de données comporte des moyens de transmission configurés pour transmettre les données collectées à un module concentrateur de données.

La transmission des données à un concentrateur de données permet un traitement global des données provenant de différents modules de collecte, le traitement des données étant ainsi uniformisé et facilité.

La présente invention concerne, selon un deuxième aspect, un système de traitement de données relatives à un ensemble d'équipements d'un véhicule de transport de passagers, comportant un ensemble de modules de collecte de données conforme à l'invention. Chaque module de collecte de données est associé à un contrôleur d'équipement gérant le fonctionnement d'au moins un équipement de l'ensemble d'équipements.

Un système de traitement de données peut ainsi comporter des modules de collecte associés à respectivement à des contrôleurs d'équipement, les contrôleurs d'équipement pouvant gérer le fonctionnement d'un seul ou de plusieurs équipements.

Selon une caractéristique, le système de collecte de données comporte en outre un module concentrateur de données configuré pour recevoir des données provenant des modules de collecte de données de l'ensemble de modules.

Le module concentrateur regroupe ainsi les données relatives à plusieurs équipements.

Selon une caractéristique, le module concentrateur de données est configuré pour stocker et transmettre des données à un serveur au sol.

Ainsi, le serveur au sol reçoit les données relatives aux équipements, en temps réel pendant leur fonctionnement. Ces données peuvent être analysées de façon à surveiller le bon fonctionnement des équipements et à préparer des opérations de maintenance. Par exemple, des opérations de maintenance peuvent être préparées à l'avance avant l'arrivée du véhicule embarquant un équipement dysfonctionnant à une station.

La présente invention concerne, selon un troisième aspect, un véhicule de transport de passagers comportant un système de traitement de données conforme à l'invention. Le véhicule de transport de passagers est par exemple un véhicule de transport ferroviaire.

La présente invention concerne, selon un quatrième aspect, un procédé de traitement de données relatives à au moins un équipement à bord d'un véhicule de transport de passagers, comportant les étapes suivantes :
- établissement d'une communication entre un module de collecte de données relatives dudit au moins un équipement et un contrôleur d'équipement gérant le fonctionnement dudit au moins un équipement, la communication étant établie à travers le port de maintenance du contrôleur d'équipement ; et
- récupération des données relatives audit au moins un équipement pendant le fonctionnement de l'équipement à des instants prédéfinis, via la communication établie.

Le procédé de traitement comporte en outre :
- une étape d'émission d'une commande de lecture de données relatives audit au moins un équipement, et
- une étape de vérification de la commande de lecture émise pour vérifier si elle est autorisée, l'étape de récupération étant mise en œuvre si à l'étape de vérification, la commande de lecture est autorisée.

Selon une caractéristique, le procédé de traitement comporte en outre une étape de transmission pour transmettre les données collectées pendant l'étape de récupération, à un module concentrateur de données.

Selon une caractéristique, le procédé de traitement comporte en outre une étape de retransmission des données reçues du module concentrateur de données, à un serveur au sol.

Le système de traitement de données, le véhicule de transport ferroviaire et le procédé de traitement de données présentent des caractéristiques et avantages analogues à ceux décrits précédemment en relation avec le module de collecte de données.

D'autres particularités et avantages de l'invention apparaîtront encore dans la description ci-après.

Aux dessins annexés, donnés à titre d'exemples non limitatifs :
La figure 1 est un schéma représentant un système de traitement de données conforme à un mode de réalisation de l'invention ;
La figure 2 est un schéma représentant un mode de collecte de données conforme à un mode de réalisation de l'invention relié à un équipement ; et
La figure 3 illustre des étapes d'un procédé de traitement de données conforme à un mode de réalisation de l'invention.

L'invention trouve une application dans le domaine des véhicules de transport de passagers, en particulier dans les véhicules de transport ferroviaire, qu'ils soient dédiés à parcourir des longues distances ou des courtes distances, tel que des véhicules de transport ferroviaire urbains, comme par exemple des métros et tramways.

En particulier, l'invention s'applique à tout type de véhicule de transport de passagers ayant des équipements dits *"intelligents",* c'est-à-dire des équipements dont le fonctionnement est géré par un contrôleur d'équipement électronique.

En général, dans le cas des véhicules de transport ferroviaire, chaque voiture du véhicule est équipée de plusieurs contrôleurs d'équipement gérant le fonctionnement des équipements présents dans la voiture, tels que les systèmes de frein, les systèmes de contrôle des portes, le système de climatisation, etc.

Dans certains véhicules de transport ferroviaire, un contrôleur d'équipement est associé à un seul équipement pour gérer son fonctionnement.

Dans d'autres types de véhicule de transport ferroviaire, plusieurs contrôleurs d'équipement gèrent le fonctionnement d'un équipement. Dans ce cas, il existe en général un contrôleur d'équipement maître qui commande le fonctionnement des contrôleurs d'équipement esclaves gérant le fonctionnement de l'équipement et récoltant l'ensemble des données relatives à cet équipement.

Dans d'autres types de véhicule de transport ferroviaire, un même contrôleur d'équipement peut gérer le fonctionnement de plusieurs équipements, les équipements pouvant être du même type ou de type différent.

Ainsi en fonction des configurations, chaque équipement est associé à au moins un contrôleur d'équipement destiné à la gestion du fonctionnement de cet équipement.

A titre d'exemple nullement limitatif, dans une voiture, peuvent être installés, un contrôleur de climatisation, un contrôleur de frein, un contrôleur de dispositifs d'affichage tels que des écrans, un contrôleur d'un système de comptage des passagers, un contrôleur des installations sanitaires, etc. Par exemple, chaque porte d'une même voiture est contrôlée par un contrôleur d'équipement, un contrôleur de porte maître centralise le fonctionnement des différents contrôleurs des portes.

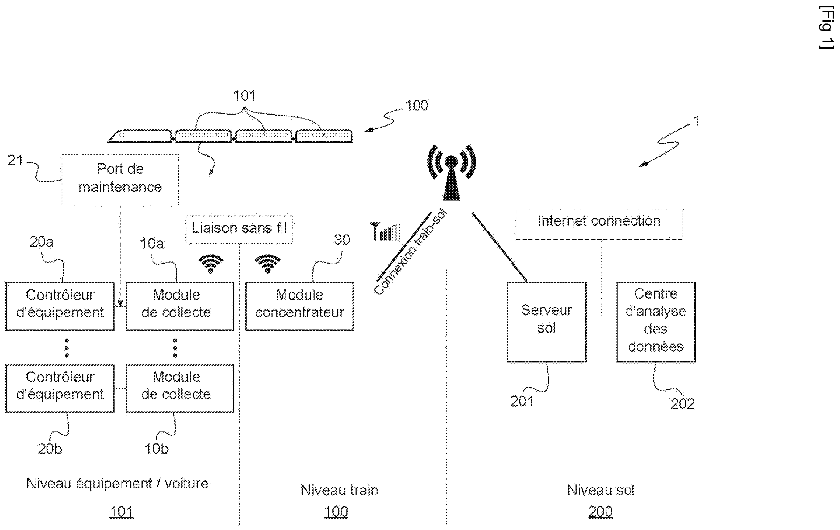

La **figure 1** représente un système de traitement des données relatives à un ensemble d'équipements d'un véhicule de transport de passagers 100 conforme à un mode de réalisation de l'invention. Dans le mode de réalisation décrit, le véhicule de transport de passagers est un véhicule de transport ferroviaire. Néanmoins, comme indiqué ci-dessus, l'invention s'applique à d'autres types de véhicule de transport de passagers.

Le mode de réalisation représenté par cette figure, comporte une première partie embarquée dans un véhicule de transport ferroviaire 100 et une deuxième partie située au sol 200.

Selon d'autres modes de réalisation non représentés, le système de traitement des données est embarqué dans le véhicule de transport ferroviaire dans sa totalité.

La partie du système de traitement des données 1 embarqué dans le véhicule de transport ferroviaire 100 comporte un ensemble de modules de collecte de données 10a, 10b (référencé aussi 10 dans un souci de simplification).

Les modules de collecte de données 10 sont répartis dans les voitures 101 du véhicule de transport ferroviaire 100.

Selon un mode de réalisation tel que celui représenté à la figure 1, chaque module de collecte de données 10 est associé à un contrôleur d'équipement 20a, 20b (référencé aussi 20 dans un souci de simplification) gérant le fonctionnement d'au moins un équipement (non illustré) du véhicule de transport ferroviaire 100.

La figure 1 représente deux modules de collecte de données 10a, 10b, associés respectivement à deux contrôleurs d'équipement 20a, 20b.Bien entendu, comme indiqué ci-dessus, le nombre de modules de collecte de données et de contrôleurs d'équipement dans une voiture du véhicule de transport ferroviaire peut être différent.

Afin de simplifier la description, on considère qu'un contrôleur d'équipement 20 gère le fonctionnement d'un seul équipement.

Bien entendu, comme indiqué ci-dessus, un même contrôleur d'équipement peut gérer le fonctionnement de plusieurs équipements ou plusieurs contrôleurs d'équipement peuvent gérer le fonctionnement d'un seul équipement.

Afin de simplifier la figure 1, des modules de collecte de données 10 et des contrôleurs d'équipement 20 présents dans une seule voiture sont représentées. On notera que le type et le nombre de modules de collecte 10 et de contrôleurs d'équipement peut être égal ou différent pour chaque voiture 101 du véhicule de transport ferroviaire 100. En outre, dans le mode de réalisation représenté, un contrôleur d'équipement 20 est associé à un module de collecte de données

Le système de collecte de données 1 peut comporter en outre plusieurs serveurs informatiques 201 au sol 200 (nommé aussi serveur au sol 201) à des positions géographiques différentes.

Les serveurs informatiques au sol 201 peuvent communiquer à travers un réseau de communication, tel qu'internet, avec un centre d'analyse des données 202.

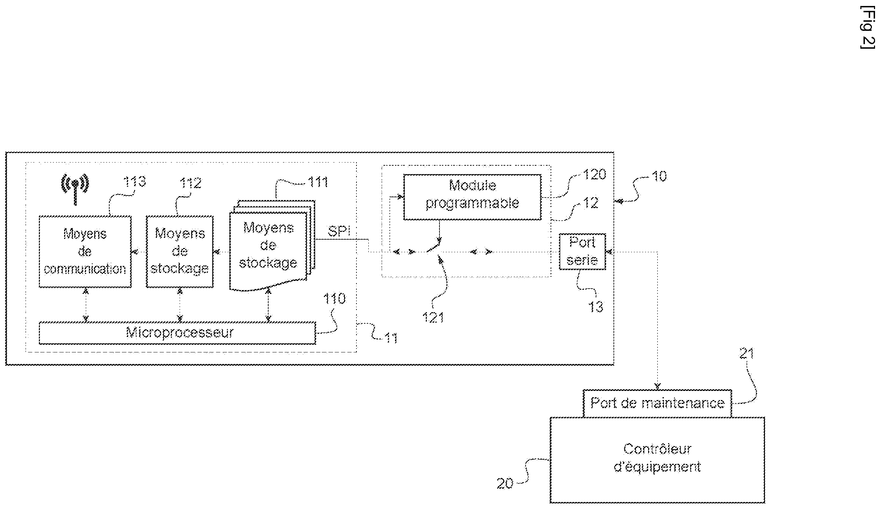

Un module de collecte de données 10 selon un mode de réalisation est représenté sur la figure 2 et sera décrit en détail ci-dessous.

Comme il sera décrit ultérieurement en référence à la figure 2, le module de collecte de données 10 est relié au contrôleur d'équipement 20 au niveau du port de maintenance 21.

A travers une connexion mise en œuvre entre le module de collecte de données 10 et le contrôleur d'équipement 20 associé, le module de collecte de données 10 collecte des données relatives à l'équipement géré par le contrôleur d'équipement 20.

Les données relatives à l'équipement peuvent comporter des paramètres d'entrée et/ou de sortie du contrôleur d'équipement 20, des paramètres déterminés par le contrôleur d'équipement 20 et/ou des états de défaut terminés par le contrôleur d'équipement 20.

Les paramètres d'entrée ou de sortie du contrôleur d'équipement 20 correspondent par exemple à des commandes adressées aux différents éléments de l'équipement contrôlé. L'obtention de ce type de paramètre permet l'évaluation de l'état de l'équipement et de vérifier le bon fonctionnement de l'équipement. En outre, le contrôleur d'équipement 20 peut déterminer des paramètres tels que des paramètres fonctionnels de l'équipement ou du véhicule de transport ferroviaire 100. Finalement, le contrôleur d'équipement 20 peut en général diagnostiquer lorsqu'un état de défaut est présent dans l'équipement électronique.

Les données collectées peuvent être utilisées afin d'analyser en profondeur le comportement de l'équipement et/ou du véhicule de transport ferroviaire 100.

Ainsi, une quantité importante de données relatives à l'équipement est obtenue par le module de collecte de données 10 et ce, en temps réel, pendant que l'équipement fonctionne. Ces données peuvent être utilisées pour vérifier le bon fonctionnement des équipements à tout moment et pour détecter de possibles dysfonctionnements en temps réel. Des opérations de maintenance peuvent ainsi être prévues rapidement et de manière optimale.

Dans un mode de réalisation tel que celui représenté, le système de collecte de données comporte un module concentrateur de données 30 qui est configuré pour recevoir des données provenant des modules de collecte de données 10.

Dans le mode de réalisation représenté, un seul module concentrateur de données 30 collecte les données provenant de l'ensemble des modules de collecte de données 10 embarqués à bord du véhicule de transport ferroviaire 100.

Dans d'autres modes de réalisation, le système de collecte de données comporte plusieurs modules concentrateurs de données, chaque module concentrateur de données recevant des données provenant d'un groupe de modules de collecte de données.

Le module concentrateur de données 30 comporte, selon un mode de réalisation, des moyens de stockage ou de mémorisation destinés à stocker les données reçues des modules de collecte de données 10.

Ainsi, le module concentrateur de données 30 peut stocker des données relatives à la totalité ou à une partie des équipements à bord du véhicule de transport ferroviaire 100.

Dans les systèmes de collecte de données comportant plusieurs modules concentrateurs de données, chaque module concentrateur de données stocke des données relatives à une partie des équipements. Par exemple, un module concentrateur de données peut être associé à des équipements d'un type particulier.

Le module concentrateur de données 30 comporte des moyens de contrôle gérant son fonctionnement. Dans certains modes de réalisation, le module concentrateur de données est configuré pour le traitement local des données provenant des modules de collecte de données 10.

Le module de collecte de données 10 ainsi que le module concentrateur de données 30 comportent selon un mode de réalisation, des moyens de communication, tel que des moyens de communication sans fil, destinés à la communication entre eux.

Les modules de collecte de données 10 adressent au moyen de cette communication mise en œuvre entre les modules de collecte de données 10 et le modules concentrateur de données 30, les données collectées relatives à l'équipement dont le contrôleur d'équipement 20 gère le fonctionnement.

Le module de collecte de données 10 et le module concentrateur de données 30 peuvent se connecter via des moyens de communication sans fil à un réseau de communication sans fil (non représenté) privé dans le véhicule 100.

Par exemple, ces moyens de communication sans fil comportent, de manière connue, des interfaces adaptées à mettre en œuvre des liaisons radio courte distance, par exemple établies selon la technologie WiFi, via la technologie radio "Bluetooth" (marque déposée) ou autres.

Dans d'autres modes de réalisation moins avantageux, la connexion entre les modules de collecte de données et le module concentrateur de données est une liaison filaire. Autrement dit, les moyens de communication du module et du module concentrateur de données peuvent comporter des moyens de communication filaires.

Le module concentrateur de données 30 peut comporter en outre des moyens de transmission configurés pour transmettre des données à un serveur au sol 201, telles que les données provenant des modules de collecte de données 10.

Dans un mode de réalisation, les données relatives aux équipements reçues par le module concentrateur de données 30 sont envoyées régulièrement au serveur au sol 201. En cas d'interruption de la connexion train-sol lors de la transmission des données, par exemple dû à une mauvaise couverture du réseau mettant en œuvre la connexion train-sol, les données sont stockées dans le module concentrateur de données 30 et transmises au serveur au sol 201 ultérieurement.

Les moyens de transmission du module concentrateur de données 30 comportent des moyens de transmission sans fil qui peuvent être configurés pour des communications à courte distance ou des communications à longue distance.

Dans le mode de réalisation représenté sur la figure 1, le module concentrateur de données 30 est configuré pour établir des connexions avec un serveur informatique 201 distinct par l'intermédiaire d'un réseau de communication.

Les moyens de communication sans fil du module concentrateur de données 30 peuvent établir une connexion avec le serveur au sol 101, et lui envoyer des données, au moyen d'un réseau de communication de téléphonie mobile fonctionnant par exemple selon les normes 3G ou 4G ou en utilisant un réseau WiFi privé.

Les moyens de communication sans fil du module concentrateur de données 30 peuvent aussi envoyer des données au serveur au sol 201 via un réseau de communication tel qu'internet auxquels ils sont connectés par les moyens d'une connexion courte distance telle qu'une connexion WiFi.

Le module concentrateur de données 30 peut comporter aussi des moyens de communication filaires pouvant établir une liaison filaire avec le serveur au sol, par exemple lorsqu'il se trouve dans une station.

Les moyens de communication sans fil de courte distance peuvent être aussi utilisés lorsque par exemple le véhicule de transport électrique se trouve au dépôt où le serveur au sol 201 est installé.

La présence d'un module concentrateur de données 30 dans le véhicule de transport ferroviaire 100 permet de limiter le nombre de connexions entre le véhicule de transport ferroviaire 100 et le sol 200 pour l'envoi des données relatives aux équipements dans le véhicule 100. En outre, le module concentrateur de données 30 permet de mettre en œuvre l'envoi de ces données de manière coordonnée.

La réduction du nombre de connexions train-sol permet de réduire les coûts liés aux abonnements aux différents réseaux de communication.

En outre, la puissance globale du système est réduite du fait de la réduction du nombre de connexions entre le véhicule de transport ferroviaire 100 et le serveur au sol 201.

La **figure 2** représente un module de collecte de données 10 conforme à un mode de réalisation de l'invention, relié à un contrôleur d'équipement 20.

Comme indiqué ci-dessus, le contrôleur d'équipement 20 gère le fonctionnement d'au moins un équipement présent dans le véhicule de transport ferroviaire 100.

Le module de collecte de données 10 comporte des moyens de connexion 13 qui sont configurés pour être reliés au port de maintenance 21 du contrôleur d'équipement 20. Dans un mode de réalisation, les moyens de connexion 13 comportent un port série.

Les moyens de connexion 13 sont en outre configurés pour établir une communication avec le contrôleur d'équipement 20 une fois que le module de collecte de données 10 et le contrôleur d'équipement 20 sont reliés à travers le port de maintenance 21.

Selon un mode de réalisation, la communication entre le module de collecte de données 10 et le contrôleur d'équipement 20 est une communication série mise en œuvre à travers le port série 13 du module de collecte de données 10.

Le module de collecte de données 10 comporte en outre des moyens de récupération des données 11 configurés pour collecter des données relatives à l'équipement dont le fonctionnement est géré par le contrôleur d'équipement 20.

Les moyens de récupération des données 11 sont configurés pour collecter des données pendant le fonctionnement de l'équipement, à des instants prédéfinis.

Dans un mode de réalisation tel que celui représenté, les moyens de récupération 11 comportent un microprocesseur 110 configuré pour mettre en œuvre la communication entre le module de collecte de données 10 et le contrôleur d'équipement 20. Par exemple, le microprocesseur 110 met en œuvre un logiciel embarqué dans le module de collecte de données 10 qui met en œuvre la communication entre le module de collecte de données 10 et le contrôleur d'équipement 20 et la collecte des données relatives à l'équipement.

Le logiciel embarqué est ainsi configuré pour la mise en œuvre d'une communication entre ces deux éléments en utilisant le protocole de communication qui leur est propre.

En outre, en fonction de l'équipement et du contrôleur d'équipement 20, le logiciel est configuré pour sélectionner des paramètres relatifs à cet équipement, aux adresses de mémoire spécifiques où se trouve les paramètres à récupérer.

Par conséquent, grâce à ce logiciel embarqué, le module de collecte de données 10 s'adapte pour communiquer avec des contrôleurs d'équipement différents et pour récupérer des données des équipements électroniques différents. Ce type de logiciel embarqué s'adapte ainsi à différents protocoles de communication et à différents équipements qui sont connus de l'homme du métier et ne nécessitent pas d'être décrits en détail.

Le logiciel peut être chargé dans le module de collecte de données 10 à sa fabrication ou à l'installation du système de traitement des données dans le véhicule de transport ferroviaire 100. Le logiciel est spécifique à la communication entre le module de collecte de données 10 et le contrôleur d'équipement 20. On notera que chaque contrôleur d'équipement 20 a un fonctionnement spécifique en fonction de l'équipement dont il gère le fonctionnement.

Le logiciel peut être chargé par exemple dans des moyens de stockage 111 telles qu'une mémoire non volatile, par exemple ROM (pour « *Read Only Memory* »), EEPROM (pour « *Electrically Erasable Read Only Memory* ») ou une mémoire Flash.

Grâce au logiciel dans le module de collecte de données 10, les moyens de récupération des données 11 sont configurés pour émettre des commandes de lecture des données relatives à l'équipement. Le contrôleur d'équipement 20 répond à ces commandes de lecture en adressant les paramètres demandés dans ces commandes de lecture, et qui étaient stockés en mémoire.

Les moyens de récupération des données 11 comportent en outre des seconds moyens de stockage ou de mémorisation 112, dans lesquels les données reçues du contrôleur d'équipement 20 sont stockées.

Les seconds moyens de stockage 112 peuvent par exemple comporter une mémoire vive ou RAM (pour « *Random Access Memory* »)*.* La mémoire vive comprend des registres adaptés à l'enregistrement, en plus des données collectées, des variables et paramètres créés et modifiés au cours de l'exécution d'un programme informatique comprenant des instructions pour la mise en œuvre d'un procédé selon l'invention. Les codes d'instructions du programme stocké en mémoire non-volatile sont chargés en mémoire RAM en vue d'être exécutés par le microprocesseur 110.

La mémoire non-volatile est par exemple une mémoire réinscriptible de type EEPROM ou mémoire Flash pouvant constituer un support au sens de l'invention, c'est-à-dire pouvant comprendre le logiciel ou programme informatique comprenant des instructions pour la mise en œuvre du procédé selon l'invention, le logiciel ayant été préalablement adapté au type de contrôleur d'équipement.

Les différents éléments du module de collecte de données 10 sont reliés à un bus de communication (non représenté) permettent l'échange de données entre eux.

Dans un mode de réalisation, le module de collecte de données 10 comporte en outre des moyens de vérification 12 configurés pour vérifier l'authenticité des commandes de lecture émises par les moyens de récupération des données 11.

Les moyens de vérification 12 permettent de rendre sécuritaire la communication entre le module de collecte de données 10 et le contrôleur d'équipement 20 ainsi que l'obtention de données relatives à l'équipement.

Selon un mode de réalisation, un ensemble de commandes de lecture autorisées sont stockées dans le module de collecte de données 10. Cet ensemble de commandes de lecture autorisées peut être stocké dans le module de collecte de données 10 par exemple lors de la fabrication du module de collecte de données 10 ou lors de l'installation du système de traitement de données 1 dans le véhicule de transport ferroviaire 100.

Les moyens de vérification 12 sont configurés pour vérifier que les commandes de lecture émises par les moyens de récupération des données 11 appartiennent à l'ensemble des commandes de lecture autorisées de façon à permettre ou à refuser l'émission de commande de lecture générée par les moyens de récupération, vers le port de maintenance 21 du contrôleur d'équipement 20.

Dans certains modes de réalisation, les moyens de vérification 12 sont en outre configurés pour surveiller la fréquence utilisée dans les communications entre le module de collecte de données 10 et le contrôleur d'équipement 20, de sorte à permettre ou à bloquer la communication en fonction de la fréquence utilisée.

Lorsque, les moyens de vérification 12 constatent que la fréquence utilisée dans les échanges entre le module de collecte de données 10 et le contrôleur d'équipement 20 (et ce bien qu'il ait été vérifié que la commande de lecture appartienne à l'ensemble de commandes de lecture autorisées) ne correspond pas à une fréquence prédéfinie, les moyens de vérification 12 empêchent la communication entre ces deux éléments.

Dans un mode de réalisation, les moyens de vérification 12 sont formés par un composant programmable 120, par exemple de type FPGA. Le composant programmable peut être programmé à la fabrication du module de collecte de données 10, ou reprogrammé ultérieurement en fonction du contrôleur d'équipement 20 auquel il va être relié.

Le composant programmable 120 peut être ainsi programmé pour permettre l'envoi de commandes de lecture générés par les moyens de récupération 11 vers le port de maintenance 21 du contrôleur d'équipement 20 si la commande de lecture fait partie de l'ensemble de commandes de lecture autorisées. L'ensemble de commandes de lecture autorisés peut être stocké au sein du composant programmable 120 ou dans un mémoire appart dans les moyens de vérification 12.

Dans le mode de réalisation représenté, les moyens de vérification 12 comportent des moyens de commutation 121 disposés entre la sortie des moyens de récupération 11 et les moyens de connexion 13. Les moyens de commutation 121 peuvent présenter une position ouverte dans laquelle l'envoi d'une commande de lecture générée par les moyens de vérification 11 vers le port de maintenance 21 du contrôleur d'équipement 20 est empêchée, ou une position fermée dans laquelle l'envoi d'une commande de lecture générée par les moyens de vérification 11 vers le port de maintenance 21 du contrôleur d'équipement 20 est permis.

Dans le mode de réalisation représenté, le composant programmable 120 commande l'ouverture et la fermeture de moyens de commutation 121 en fonction du résultat de la vérification de l'appartenance de la commande de lecture générée à l'ensemble de commandes de lecture autorisées.

Comme indiqué précédemment, le module de collecte de données 10 comporte en outre des moyens de communication 113 qui sont configurés pour transmettre les données collectées et stockées en mémoire 112 au module concentrateur de données 30.

Le module concentrateur de données 30 peut comporter dans certains modes de réalisation, une interface entrée/sortie (non représentée), par exemple un écran, un clavier, une souris ou un autre dispositif de pointage tel qu'un écran tactile permettant à un utilisateur d'interagir avec le système de collecte de données 1 à bord du véhicule 100 via une interface graphique. Cette caractéristique peut notamment permettre au conducteur de visualiser en temps réel des états ou évènements critiques capturés par les modules (défaut d'équipements sécuritaires tels que les portes ou les freins, état de fermeture des portes, impossibilité de fermer une porte à cause d'un obstacle, niveau de sable insuffisant ne permettant plus d'assurer un bon niveau d'adhésion avec le rail, etc...).

Comme indiqué ci-dessous, dans certains modes de réalisation, le module concentrateur de données présente des capacités d'analyse des données reçues des modules de collecte de données.

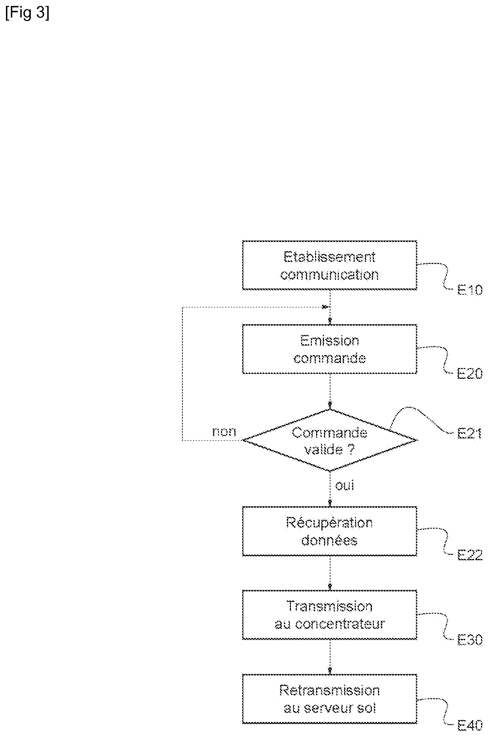

Des étapes du procédé de traitement de données relatives à au moins un équipement à bord d'un véhicule de transport ferroviaire, selon un mode de réalisation, sont représentées à la **figure 3****.**

Lorsque le module de collecte de données 10 et le contrôleur d'équipement 20 sont reliés entre eux, une étape d'établissement d'une communication E10 entre le module de collecte de données 10 et le contrôleur d'équipement 20 est mise en œuvre. Comme indiqué ci-dessus, la communication est établie à travers le port de maintenance 21 du contrôleur d'équipement 20.

Ensuite, les moyens de récupération de données 11 mettent en œuvre une étape de récupération E22 des données relatives à l'équipement pendant le fonctionnement de l'équipement à des instants prédéfinis, via ladite communication établie à l'étape E10. Pour cela, les moyens de récupération 11 émettent une commande de lecture à une étape d'émission E20. Les moyens de vérification 12 vérifient que cette commande de lecture est autorisée lors d'une étape de vérification E21.

Si à l'étape de vérification de données E21, il est vérifié que la commande de lecture est autorisée, ou que par exemple elle appartient à l'ensemble de commandes de lecture autorisées, l'étape de récupération de données E22 est mise en œuvre.

Les données collectées pendant l'étape de récupération E22 sont ensuite traitées et transmises, lors d'une étape de transmission E30 au module concentrateur de données 30.

Le module concentrateur de données 30 met en œuvre une étape de retransmission E40 des données reçues dudit module concentrateur de données, à un serveur au sol.

Ainsi, grâce que système de collecte de données, une quantité importante de données relatives à des équipements dans un véhicule de transport de passagers peut être récupérée de façon à pouvoir vérifier le bon fonctionnement des équipements et à pouvoir agir rapidement en cas de dysfonctionnement. En outre, des analyses sur le comportement des équipements lors des trajets du véhicule, ainsi que le comportement du véhicule lui-même, peuvent être réalisés.

## Revendications

1. Module de collecte de données relatives à au moins un équipement d'un véhicule de transport de passagers (100), **caractérisé en ce qu'**il comporte :
- des moyens de connexion (13) configurés pour être reliés au port de maintenance (21) d'un contrôleur d'équipement (20) gérant le fonctionnement dudit au moins un équipement et pour établir une communication avec ledit contrôleur d'équipement (20) à travers ledit port de maintenance (21) ;
- des moyens de récupération de données (11) configurés pour collecter pendant le fonctionnement dudit au moins un équipement à des instants prédéfinis, des données relatives audit au moins un équipement via ladite communication établie, et en outre configurés pour émettre des commandes de lecture de données relatives audit au moins un équipement ; et
- des moyens de vérification (12) configurés pour vérifier l'authenticité des commandes de lecture.

2. Module de collecte de données conforme à la revendication 1, **caractérisé en ce que** lesdits moyens de vérification (12) comportent un composant programmable (120).

3. Module de collecte de données conforme à l'une des revendications 1 ou 2, **caractérisé en ce que** les moyens de récupération (11) sont configurés pour la communication entre le module de collecte de données (10) et le contrôleur d'équipement (20), et pour collecter les données relatives à l'équipement.

4. Module de collecte de données conforme à l'une des revendications 1 à 3, **caractérisé en ce que** les données relatives audit au moins un équipement comportent des paramètres d'entrée ou de sortie dudit contrôleur d'équipement (20) et/ou des paramètres déterminés par ledit contrôleur d'équipement (20) et/ou des états de défaut déterminés par ledit contrôleur d'équipement (20).

5. Module de collecte de données conforme à l'une des revendications 1 à 4, **caractérisé en ce qu'**il comporte des moyens de transmission (113) configurés pour transmettre les données collectées à un module concentrateur de données (30).

6. Système de traitement de données relatives à un ensemble d'équipements d'un véhicule de transport de passagers (100), **caractérisé en ce qu'**il comporte un ensemble de modules de collecte de données (10) conforme à l'une des revendications précédentes, chaque module de collecte de données (10) étant associé à un contrôleur d'équipement (20) gérant le fonctionnement d'au moins un équipement de l'ensemble d'équipements.

7. Système de collecte de données conforme à la revendication 6, **caractérisé en ce qu'**il comporte en outre un module concentrateur de données (30) configuré pour recevoir des données provenant des modules de collecte de données (10) de l'ensemble des modules.

8. Système de collecte de données conforme à la revendication 7, **caractérisé en ce que** ledit module concentrateur de données (30) est configuré pour transmettre des données à un serveur au sol (201).

9. Véhicule de transport de passagers comportant un système de traitement de données conforme à l'une des revendications 6 à 8.

10. Procédé de traitement de données relatives à au moins un équipement à bord d'un véhicule de transport de passagers, **caractérisé en ce qu'**il comporte les étapes suivantes :
- établissement (E10) d'une communication entre un module de collecte de données (10) relatives dudit au moins un équipement et un contrôleur d'équipement (20) gérant le fonctionnement dudit au moins un équipement, la communication étant établie à travers le port de maintenance (21) dudit contrôleur d'équipement (20) ;
- récupération (E22) desdites données relatives audit au moins un équipement pendant le fonctionnement de l'équipement à des instants prédéfinis, via ladite communication établie
- émission (E20) d'une commande de lecture de données relatives audit au moins un équipement ; et
- vérification (E21) de la commande de lecture émise pour vérifier si elle est autorisée, l'étape de récupération étant mise en œuvre si à ladite étape de vérification (E21), la commande de lecture est autorisée.

11. Procédé de traitement conforme à la revendications 10, **caractérisé en ce qu'**il comporte en outre une étape de transmission (E30) pour transmettre les données collectées pendant l'étape de récupération (E22), à un module concentrateur de données (30).

12. Procédé de traitement conforme à la revendication 11, **caractérisé en ce qu'**il comporte en outre une étape de retransmission (E40) des données reçues dudit module concentrateur de données (30), à un serveur au sol (201).

## Patentansprüche

1. Datenerfassungsmodul in Bezug auf mindestens eine Ausrüstung eines Personenbeförderungsfahrzeugs (100), **dadurch gekennzeichnet, dass** es beinhaltet:
- Verbindungsmittel (13), die konfiguriert sind, um mit dem Wartungsanschluss (21) einer Ausrüstungssteuerung (20) verbunden zu werden, die den Betrieb der mindestens einen Ausrüstung verwaltet, und um über den Wartungsanschluss (21) eine Kommunikation mit der Ausrüstungssteuerung (20) aufzubauen;
- Datenabrufmittel (11), die konfiguriert sind, um während des Betriebs der mindestens einen Ausrüstung zu vordefinierten Zeitpunkten Daten in Bezug auf die mindestens eine Ausrüstung über die aufgebaute Kommunikation zu erfassen, und weiter konfiguriert sind, um Befehle zum Lesen von Daten in Bezug auf die mindestens eine Ausrüstung auszugeben; und
- Verifizierungsmittel (12), die konfiguriert sind, um die Echtheit der Lesebefehle zu verifizieren.

2. Datenerfassungsmodul nach Anspruch 1, **dadurch gekennzeichnet, dass** die Verifizierungsmittel (12) eine programmierbare Komponente (120) beinhalten.

3. Datenerfassungsmodul nach einem der Ansprüche 1 oder 2, **dadurch gekennzeichnet, dass** die Abrufmittel (11) für die Kommunikation zwischen dem Datenerfassungsmodul (10) und der Ausrüstungssteuerung (20) und zum Erfassen der Daten in Bezug auf die Ausrüstung konfiguriert sind.

4. Datenerfassungsmodul nach einem der Ansprüche 1 bis 3, **dadurch gekennzeichnet, dass** die Daten in Bezug auf die mindestens eine Ausrüstung Eingangs- oder Ausgangsparameter der Ausrüstungssteuerung (20) und/oder von der Ausrüstungssteuerung (20) bestimmte Parameter und/oder von der Ausrüstungssteuerung (20) bestimmte Fehlerzustände beinhalten.

5. Datenerfassungsmodul nach einem der Ansprüche 1 bis 4, **dadurch gekennzeichnet, dass** es Übertragungsmittel (113) beinhaltet, die konfiguriert sind, um die erfassten Daten an ein Datenkonzentratormodul (30) zu übertragen.

6. System zur Verarbeitung von Daten in Bezug auf eine Ausrüstungseinheit eines Personenbeförderungsfahrzeugs (100), **dadurch gekennzeichnet, dass** es eine Einheit von Datenerfassungsmodulen (10) nach einem der vorstehenden Ansprüche beinhaltet, wobei jedes Datenerfassungsmodul (10) einer Ausrüstungssteuerung (20) zugeordnet ist, die den Betrieb mindestens einer Ausrüstung der Ausrüstungseinheit verwaltet.

7. Datenerfassungssystem nach Anspruch 6, **dadurch gekennzeichnet, dass** es weiter ein Datenkonzentratormodul (30) beinhaltet, das konfiguriert ist, um Daten zu empfangen, die von den Datenerfassungsmodulen (10) der Einheit von Modulen stammen.

8. Datenerfassungssystem nach Anspruch 7, **dadurch gekennzeichnet, dass** das Datenkonzentratormodul (30) konfiguriert ist, um Daten an einen Server am Boden (201) zu übertragen.

9. Personenbeförderungsfahrzeug, das ein Datenverarbeitungssystem nach einem der Ansprüche 6 bis 8 beinhaltet.

10. Verfahren zur Verarbeitung von Daten in Bezug auf mindestens eine Ausrüstung an Bord eines Personenbeförderungsfahrzeugs, **dadurch gekennzeichnet, dass** es die folgenden Schritte beinhaltet:
- Aufbauen (E10) einer Kommunikation zwischen einem Datenerfassungsmodul (10) in Bezug auf die mindestens eine Ausrüstung und einer Ausrüstungssteuerung (20), die den Betrieb der mindestens einen Ausrüstung verwaltet, wobei die Kommunikation über den Wartungsanschluss (21) der Ausrüstungssteuerung (20) aufgebaut wird;
- Abrufen (E22) der Daten in Bezug auf die mindestens eine Ausrüstung während des Betriebs der Ausrüstung zu vordefinierten Zeitpunkten über die aufgebaute Kommunikation
- Ausgeben (E20) eines Lesebefehls für Daten in Bezug auf die mindestens eine Ausrüstung; und
- Verifizieren (E21) des ausgegebenen Lesebefehls, um zu verifizieren, ob er zulässig ist, wobei der Schritt zum Abrufen umgesetzt wird, wenn der Lesebefehl bei dem Verifizierungsschritt (E21) zulässig ist.

11. Verfahren zur Verarbeitung nach Anspruch 10, **dadurch gekennzeichnet, dass** es weiter einen Übertragungsschritt (E30) zum Übertragen der während des Abrufschritts (E22) erfassten Daten an ein Datenkonzentratormodul (30) beinhaltet.

12. Verfahren zur Verarbeitung nach Anspruch 11, **dadurch gekennzeichnet, dass** es weiter einen Schritt zum Weiterleiten (E40) der von dem Datenkonzentratormodul (30) empfangenen Daten an einen Server am Boden (201) beinhaltet.

## Claims

1. Data collection module relating to at least one piece of equipment of a passenger transport vehicle (100), **characterised in that** it comprises:
- connection means (13) configured to be connected to the maintenance port (21) of an equipment controller (20) that manages the operation of said at least one piece of equipment and to establish communication with said equipment controller (20) through said maintenance port (21);
- data retrieval means (11) configured to collect, during the operation of said at least one piece of equipment at predefined times, data relating to said at least one piece of equipment via said established communication, and further configured to issue data read commands relating to the at least one piece of equipment; and
- verification means (12) configured to verify the authenticity of the read commands.

2. Data collection module according to claim 1, **characterised in that** said verification means (12) comprise a programmable component (120).

3. Data collection module according to either of claims 1 or 2, **characterised in that** the retrieval means (11) are configured for communication between the data collection module (10) and the equipment controller (20), and for collecting the data relating to the equipment.

4. Data collection module according to any one of claims 1 to 3, **characterised in that** the data relating to the at least one piece of equipment comprises input or output parameters of said equipment controller (20) and/or parameters determined by said equipment controller (20) and/or fault states determined by said equipment controller (20).

5. Data collection module according to any one of claims 1 to 4, **characterised in that** it comprises transmission means (113) configured to transmit the collected data to a data concentrator module (30).

6. Data-processing system relating to a set of pieces of equipment of a passenger transport vehicle (100), **characterised in that** it comprises a set of data collection modules (10) according to any one of the preceding claims, each data collection module (10) being associated with an equipment controller (20) managing the operation of at least one piece of equipment of the set of pieces of equipment.

7. Data collection system according to claim 6, **characterised in that** it further comprises a data concentrator module (30) configured to receive data from the data collection modules (10) of the set of modules.

8. Data collection system according to claim 7, **characterised in that** said data concentrator module (30) is configured to transmit data to a ground-based server (201).

9. Passenger transport vehicle comprising a data-processing system according to any one of claims 6 to 8.

10. Data-processing method relating to at least one piece of equipment on board a passenger transport vehicle, **characterised in that** it comprises the following steps:
- establishing (E10) communication between a data collection module (10) relating to said at least one piece of equipment and an equipment controller (20) that manages the operation of said at least one piece of equipment, the communication being established through the maintenance port (21) of said equipment controller (20);
- retrieving (E22) said data relating to said at least one piece of equipment during the operation of the equipment at predefined times, via said established communication,
- issuing (E20) a data read command relating to said at least one piece of equipment; and
- verifying (E21) the read command issued to verify whether it is authorised, the retrieval step being implemented if, at said verification step (E21), the read command is authorised.

11. Processing method according to claim 10, **characterised in that** it further comprises a transmission step (E30) for transmitting the data collected during the retrieval step (E22) to a data concentrator module (30).

12. Processing method according to claim 11, **characterised in that** it further comprises a step of retransmitting (E40) the data received from said data concentrator module (30) to a ground-based server (201).
